(19) Europäisches Patentamt

European Patent Office

Office européen des brevets

(11) **EP 1 613 092 A2**

(12) **EUROPEAN PATENT APPLICATION**

(43) Date of publication:
**04.01.2006 Bulletin 2006/01**

(51) Int Cl.:
*H04N 7/26* (2006.01)

(21) Application number: **05010891.9**

(22) Date of filing: **19.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **01.06.2004  US 858740**

(71) Applicant: **SEIKO EPSON CORPORATION**
**Shinjuku-ku,**
**Tokyo 163-0811 (JP)**

(72) Inventors:
• **Bhattacharjya, Anoop K.**
  **Campbell**
  **California 95008 (US)**
• **Bhaskaran, Vasudev**
  **Sunnyvale**
  **California 94086 (US)**

(74) Representative: **Grünecker, Kinkeldey,**
**Stockmair & Schwanhäusser**
**Anwaltssozietät**
**Maximilianstrasse 58**
**80538 München (DE)**

(54) **Fixed budget frame buffer compression using block-adaptive spatio-temporal dispersed dither**

(57)  A codec that compresses video data by tiling a digital representation or frame into blocks and encoding the difference between each pixel value in an image block that is not subject to special treatment and the block minimum value using an adaptive dispersed dither. Higher output quality can be obtained by changing the dither matrix from frame to frame. Certain blocks are encoded differently to further conserve bits. Constant blocks, which are blocks in which the difference between the maximum and minimum pixel values in that block is less than a predefined threshold, are encoded differently. Blocks in which all pixels are within a predetermined distance of either the maximum or minimum block value, referred to as binary-like blocks, are encoded using a single bit. The overall coding scheme can be modified even further to accommodate a fixed bit budget for the compressed output. Other features can also be supported including contrast and brightness adjustment and accessing/decoding random blocks.

Fig. 10

**Description**

**BACKGROUND OF THE INVENTION**

**Field of the Invention**

The present invention relates to block-based techniques for compressing video data in a frame buffer. The techniques may be implemented as hardware or software in a device such as a video display controller.

**Description of the Related Art**

A codec (an assembly comprising a coder and a decoder in one piece of equipment) is an important component of any larger device that is required to compress and decompress data. Codecs include algorithms used to compress and decompress the data, which may be video, still-image and/or sound data, so that such data is easier for the processors to manage. In video or LCD display controllers, codecs defines video settings such as frame rate and size and audio settings, if audio is supported, as bits of quality. Most codecs also have rate-control, enabling the devices in which they operate to adapt to available bandwidth. In such devices, the quality of the displayed video depends in part on the capabilities of the associated codec.

As display resolution and size increases, greater demand is placed on the codec inside. For such improvements to be realized, the codecs must be able to support the larger display size and higher color depth. In hand-held environments, such as cell-phones or personal digital assistants (PDAs) where the resources (computational power, display buffer allocation, etc.) with which the codecs operate are limited, the demand placed on the codec is typically even greater. Thus, to support the improvements in display quality in the hand-held environment, there is a continuing need for codecs with low operating overhead.

**OBJECTS OF THE INVENTION**

Accordingly, it is an object of the present invention to overcome the above-mentioned problems and to provide such a codec.

It is another object of this invention to provide a codec which operates with low computational complexity and has low memory requirements.

**SUMMARY OF THE INVENTION**

According to one aspect of this invention, a method for compressing data comprises (a) tiling an input representation or frame into a plurality of blocks, each of which contains a plurality of pixels, each having a value; (b) determining and storing the maximum pixel value and minimum pixel value in each block of the input representation or frame; and (c) for select blocks in the input representation or frame, encoding the values of the pixels in a given block based on the maximum or minimum pixel value determined for that block using an adaptive dispersed dither to generate a compressed output.

The select blocks in the input representation or frame can comprise all or a subset of all of the blocks in the input representation or frame.

Preferably, in encoding step (c), for each pixel in a given block, a difference between the value of that pixel and that block's minimum pixel value is encoded using the adaptive dispersed dither. In one scheme, the encoding of the values of the pixels in the given block using an adaptive dispersed dither comprises determining a bit depth $b$ at which to perform the adaptive dispersed dither; rescaling each pixel value in the given block; and representing each rescaled pixel value in the given block as one of two dithered $b$-bit values.

The method may further comprise determining, for each block in the input representation or frame, whether the difference between the block's maximum and minimum pixel values is less than a predefined threshold; and skipping encoding step (c), either for each of the blocks for which the difference between the maximum pixel and minimum pixel values is determined to be less than the predefined threshold, or for each of the blocks for which all pixels are determined to be within a predetermined distance of that block's maximum or minimum pixel value. In the latter case, each of the pixels in a block for which it is determined that all pixels are within the predetermined distance of that block's maximum or minimum pixel value is preferably encoded with a single bit.

The method may also be employed when the generated compressed output is bounded by a bit budget. In one such budget-constrained arrangement, the encoding of the values of the pixels in the given block using an adaptive dispersed dither comprises calculating a quota of bits for each block based on the bit budget and the number of blocks to be encoded; determining a recommended bit depth at which to perform the adaptive dispersed dither; reducing the recommended bit depth for a given block, if using the recommended bit depth for that block would exceed the block's calculated quota plus any saved bits available from encoding previous blocks; and for each block for which the recommended bit depth is reduced, performing the adaptive dispersed dither on each block at the reduced bit depth calculated for that block, and for each block for which the recommended bit depth is not reduced, performing the adaptive dispersed dither at the recommended bit depth. In another budget-constrained arrangement, the encoding of the values of the pixels in the given block using an adaptive dispersed dither comprises calculating a quota of bits for each block based on the bit budget and the number of blocks to be encoded; determining a recommended bit depth at which to perform the adaptive dispersed dither; defining a horizon parameter that specifies a number of yet-to-be-encoded blocks from which a current block can borrow bits; computing a number of bits that would be available to a given block from all yet-to-be-encoded blocks within the horizon parameter; reducing the recommended bit depth for a given block, if using the recommended bit depth for that block would exceed the block's calculated quota plus any saved bits available from encoding previous blocks plus the number of bits that would be available to that block from all yet-to-be-encoded blocks within the horizon parameter; and for each block for which the recommended bit depth is reduced, performing the adaptive dispersed dither on each block at the reduced bit depth calculated for that block, and for each block for which the recommended bit depth is not reduced, performing the adaptive dispersed dither at the recommended bit depth.

In another aspect, the invention involves a device that is configured to compress video data. The device, which be a codec, comprises a processor configured to (i) tile an input representation or frame into a plurality of blocks, each of which contains a plurality of pixels, each having a value, and (ii) determine the maximum pixel value and minimum pixel value in each block of the input representation or frame; a memory configured to store the determined maximum and minimum pixel values; and an encoder configured to encode the values of the pixels in a given block of select blocks in the input representation or frame based on the maximum or minimum pixel value determined for that block using an adaptive dispersed dither to generate a compressed output.

The encoder may be configured to perform additional processing as described-above with respect to the method.

In accordance with further aspects of the invention, the above-described method or any of the steps thereof may be embodied in a program of instructions (e.g., software) which may be stored on, or conveyed to, a computer or other processor-controlled device for execution. Alternatively, the method or any of the steps thereof may be implemented using functionally equivalent hardware (e.g., ASIC, digital signal processing circuitry, etc.) or a combination of software and hardware.

Other objects and attainments together with a fuller understanding of the invention will become apparent and appreciated by referring to the following description and claims taken in conjunction with the accompanying drawings.

## BRIEF DESCRIPTION OF THE DRAWINGS

Fig. 1 is a schematic diagram showing various components of the encoding/decoding system in accordance with embodiments of the invention.

Fig. 2 illustrates an input image that represents a multi-color image on which the encoding and decoding techniques of this invention may be applied.

Fig. 3 illustrates the Y-component of the input image shown in Fig. 2.

Fig. 4 is a block diagram illustrating the functions of the encoding components of the system.

Fig. 5 is an enlarged representation of a Block-Maximum image that is used in connection with embodiments of the invention.

Fig. 6 is an enlarged representation of a Block-Minimum image that is used in connection with embodiments of the invention.

Fig. 7 is a block diagram of the decoder illustrating the functions of the decoding components of the system.

Fig. 8 is a flow diagram illustrating one embodiment of a fixed-bit-budget coding/decoding scheme.

Fig. 9 is a flow diagram illustrating another embodiment of a fixed-bit-budget coding/decoding scheme.

Fig. 10 is an illustration of an image to which the coding techniques of the present invention have been applied, with constant blocks, binary-like blocks and dithered blocks identified.

## DESCRIPTION OF THE PREFERRED EMBODIMENTS

### A. Overview

The invention is particularly designed for compressing/decompressing data in the frame buffer of a video or LCD display controller. In this environment, the compression is typically done prior to the data signals being converted to signals in another domain, such as NTSC for output to a display such as a television set. The compression/decompression techniques of this invention are advantageously designed to have low computational complexity and memory requirements, while still maintaining high visual quality. The techniques are also designed to represent text and line content with high quality and minimal blurring, while having good gradation properties for representing natural images.

The compressing/decompressing techniques of the present invention can be conveniently incorporated into a codec, i.e., a device having both an encoder and a decoder. The codec itself is typically part of a larger system or device (e.g., a video or LCD controller) which performs data compression/decompression as one of its functions. While the techniques of the present invention are specifically designed for use in a video or LCD display controller, they are not so confined. The techniques of the invention may be incorporated into other systems/devices that require compression/decompression. It should also be noted that, while the full effect of the invention is realized with a system/device having both compression and decompression functions, those skilled in the art will appreciate that certain aspects of the invention may be realized with only an encoder or only a decoder.

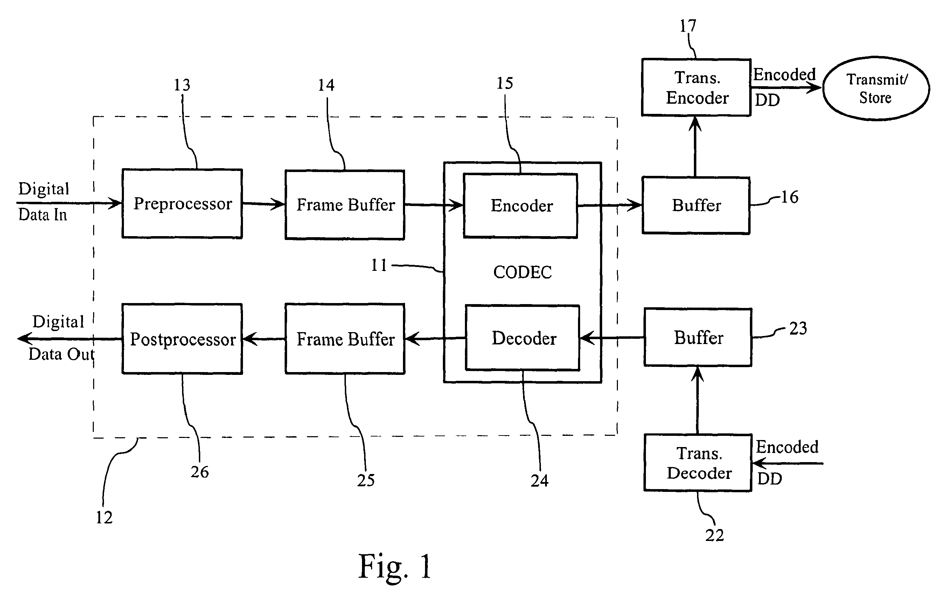

Referring to Fig. 1, a detailed schematic diagram of a codec 11 that is embodied in a video display controller 12 is configured to operate in accordance with the principles of the invention. The encoder component of the codec 11 operates on incoming digital data that may originate from any of a variety of digital sources, such as a digital camera, digital camcorder, decoder, etc. Analog data from any of a variety of sources may also be received after it is converted to digital data in an analog-to-digital converter.

The digital data is received by a preprocessor 13 which prepares the data for compression. Essentially, the preprocessor 13 reduces the number of pixels to be coded, if necessary, and arranges the remaining pixels in a format most suitable for coding. The preprocessor 13 may perform any of the following operations: conversion, if needed, to the color format most suitable for compression, e.g., YUV; removal of digital bits collected during blanking intervals; conversion from interleaved to progressive scan format, if appropriate; and/or up-sampling or down-sampling of the data or components thereof, as appropriate, to adjust the resolution, reduce the frame rate, etc., prior to coding.

The preprocessed digital data is then stored in frames in a frame buffer 14 while waiting to be compressed. Encoder 15 fetches the data frame-by-frame and encodes each color plane or channel as described below. The output of encoder 15 is buffered in a buffer 16 where the various image components are stored while compression is in process. The compressed frames are then typically assembled in a transmission encoder 17 into a standard video stream 18 for transmission and/or storage. Transmission/storage may be preceded or followed by conversion of the encoder output to signals in another domain such as NTSC for output to a television set.

The decoding process works in reverse, performing inverse operations to restore an approximate representation of an original video data stream. An encoded video stream 21 is processed by a transmission decoder 22 and stored in a buffer 23 prior to decoding. Decoder 24 inverts the operations of the encoder. The output of the decoder 24 is temporarily stored in a buffer 25 as a video postprocessor 26 reformats the decompressed digital data 27 for output.

In embodiment of Fig. 1, buffers 16 and 23 and transmission encoder and decoder 17 and 22 respectively are shown as external to the video controller 12. This is just one arrangement. In other arrangements, those components may be included as part of video controller 12 which in either case may be a single integrated circuit.

The functional details of encoder 15 and decoder 24 will now be described.

### B. Encoder

For purposes of illustration, the compression process performed by the encoder 15 is described for a single color plane with say, 8 bits per color. For an image or frame containing multiple color planes, the process can be performed on the additional color planes as well. For a multi-color video or image (e.g., YUV data), the encoding operations described below are performed on each color channel or plane independently.

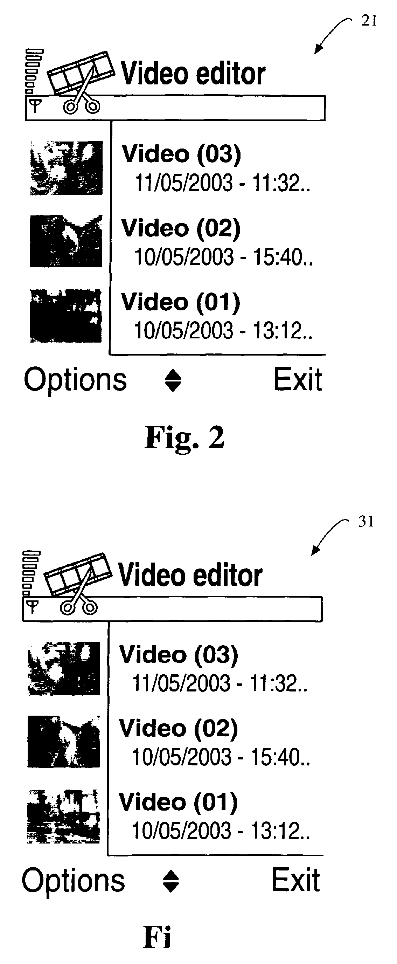

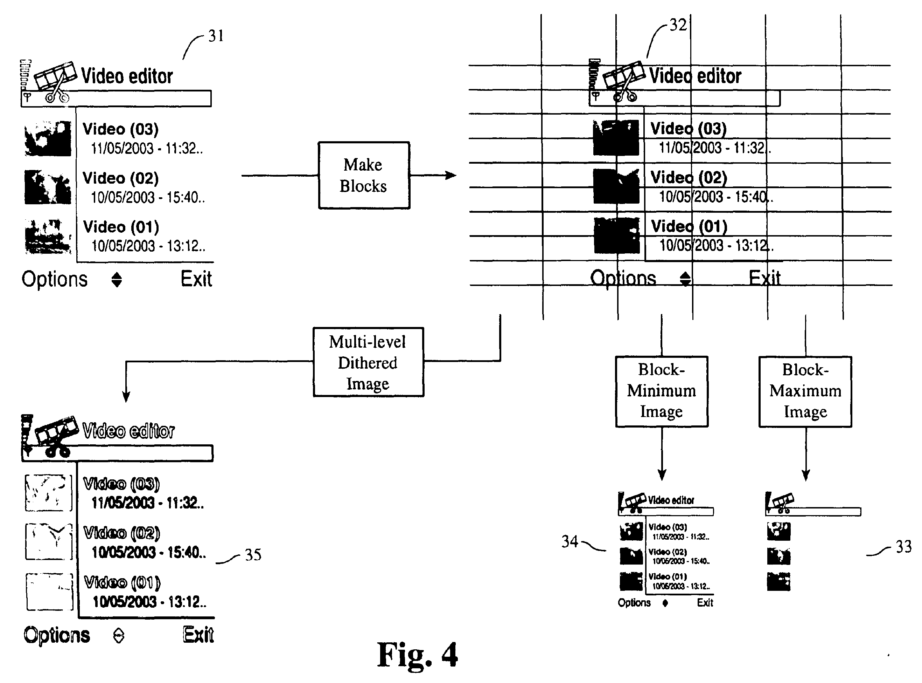

Figs. 2 and 3 respectively illustrate an input image 21 that represents a multi-color image and the Y-component 31 of that input image. The encoding operations are described below with reference to the Y-channel or Y-component of a multi-color image in YUV color space. If a color image to be processed in not in YUV color space it is first converted to that color space using any known color conversion method.

Referring to Fig. 4, an input image/frame's Y-component 31 is tiled into pixel blocks of dimensions *blockWidth*

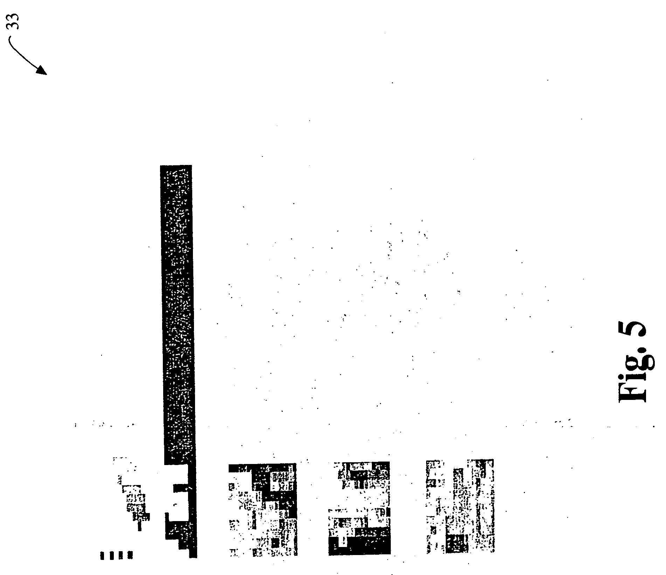

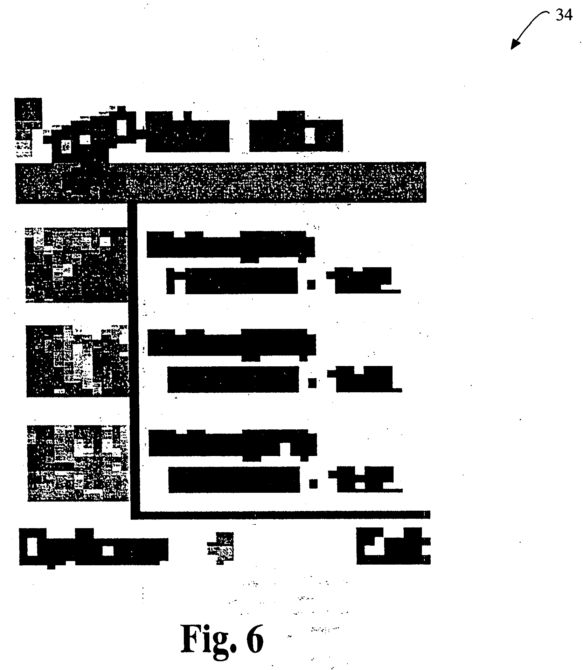

$\times$ *blockHeight* to yield tiled image/frame 32. For each block, the maximum pixel value and minimum pixel value are determined and stored. In one embodiment, the maximum and minimum pixel values are stored in a Y-component Block-Maximum image 33 and a Y-component Block-Minimum image 34, respectively, which may be stored in frame buffer 14 or in other readily accessible memory in communication with video controller 12. An enlargement of Block-Maximum image 33 is shown in Fig. 5 and an enlargement of Block-Minimum image 34 is shown in Fig. 6. The dimensions of each of the Block-Maximum and Block-Minimum image is reduced by factors of *blockWidth* and *blockHeight* in the horizontal and vertical dimensions, respectively. Thus, the size of the Block-Minimum and Block-Maximum images for an image of dimensions *imageWidth* $\times$ *imageHeight* is given by $\left\lceil \frac{imageWidth}{blockWidth} \right\rceil \times \left\lceil \frac{imageHeight}{blockHeight} \right\rceil$ **bytes**, where $\lceil x \rceil$ denotes the smallest integer greater than or equal to *x* which is the result of the ratio.

Each pixel value in an image block lies between the minimum and maximum values for the block. The difference between a pixel value in the block and the block's minimum pixel value is encoded using an adaptive dispersed dither. In general, dithering proceeds by first determining how many bits per pixel should be used to perform the dither. In one embodiment, the bit-depth for dithering is determined by consulting a look-up table designated the *recommendedBitDepth.* The *recommendedBitDepth* look-up table for the illustrated example is a 256-element table mapping (maximum - minimum) values of a block to a corresponding bit depth.

Multi-level dithering is performed on tiled image/frame 32 by using a $M \times N$ matrix of 8-bit thresholds denoted, $d_{ij}$, to generate a multi-level dithered image 35. Let *blockMax* and *blockMin* denote the maximum and minimum values for pixels in a given block. The number of bits desired for dithering a pixel in this block is given by:

$$b = recommendedBitDepth[blockMax - blockMin].$$

To dither the pixel value at location *(x,y)* with *b* bits, the pixel at location *(x,y)* (denoted $p_{xy}$) is first rescaled to:

$$r_{xy} = \frac{255(p_{xy} - blockMin)}{blockMax - blockMin}.$$

The rescaled value, $r_{xy}$, is now represented as the dithered b-bit value, $o_{xy}$, where,

$$o_{xy} = \begin{cases} low + 1 & if \ r_{xy} - (low << (9 - b)) > (d_{x \bmod N, y \bmod M} >> (b-1)) \\ low & otherwise, \end{cases}$$

where, *low* = $r_{xy}$ >> (9 - *b*), and >> denotes the bit right shift operator, and << denotes the bit left shift operator.

B.1 Constant Blocks

To conserve bits further, encoder 15 is preferably modified to skip over the encoding of constant blocks. A constant block is defined as one in which the difference, *blockMax - blockMin* is less than a predefined threshold. In this case, the *recommendedBitDepth* for this difference is set to 0 bits. In this case, the value of (*blockMax + blockMin*)/2 is recorded in both the maximum and minimum images, and no dither bits are generated.

B.2 Binary-Like Blocks

To conserve bits further, encoder 15 is preferably modified to encode binary-like blocks as described below. This modification is preferably in addition to the modification with respect to the constant blocks, although the modification can alternatively be made directly to basic encoder configuration described above.

If all pixels in a block are within a predetermined distance of the *blockMax* or *blockMin*, these are all encoded using a single bit, even though *recommendedBitDepth[blockMax-blockMin]* prescribes a larger bit depth. In this case, the output $o_{xy}$ for an input pixel, $p_{xy}$, is given by:

$$o_{xy} = \begin{cases} 1 & if \ p_{xy} > (blockMax + blockMin)/2 \\ 0 & otherwise \end{cases}$$

This modification reduces the number of bits needed to encode large step-like data (which typically appears around text and line boundaries) and preserves such edges better than a dispersed dither. While the encoding of skipped blocks does not need special markers (because checking equality in the maximum and minimum images marks all blocks for which no bits have been generated), the encoding of binary-like blocks needs a marker since inferring the bit depth from *recommendedBitDepth[blockMax-blockMin]* for a binary-like block will typically lead to overestimating the number of bits used for dithering the block. The encoder 15 flags binary-like blocks by perturbing the least-significant bit of *blockMax* for all non-constant blocks. Thus, if the given non-constant block is a binary-like block, the least-significant bit of *blockMax* is coerced to 0, else it is coerced to 1.

As previously noted, the above-described encoder 15, including the modifications, is easily extended to multi-color images (e.g., YUV) by encoding each channel or color plane independently.

**C. Decoder**

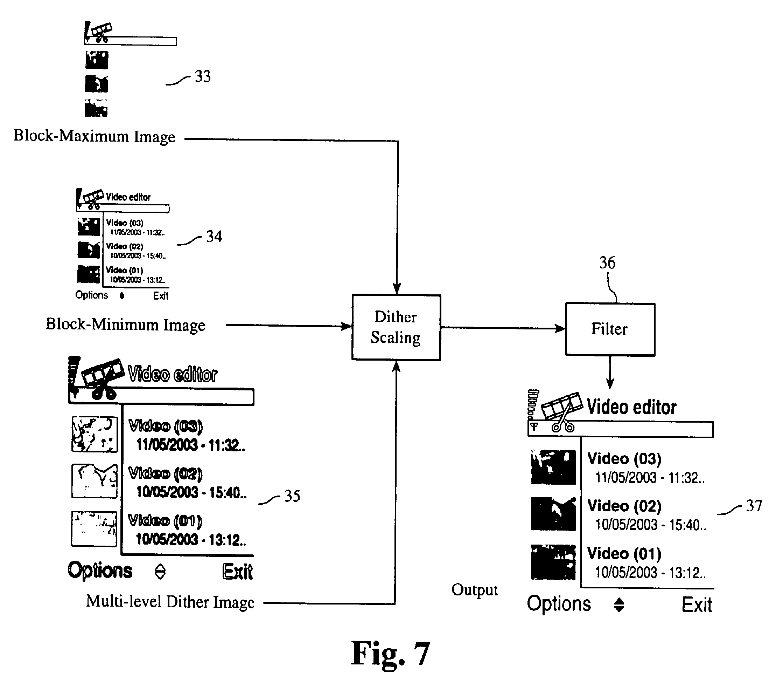

The decoder 24 proceeds by inverting the operations performed in the encoder 15. The decoding process is schematically illustrated in Fig. 7. First, the *blockMax* and *blockMin* for a given block are determined from the stored maximum and minimum images 33 and 34 respectively. If *blockMax* is equal to *blockMin*, this value is output for the entire block. Next, if the least-significant bit of *blockMax* is 0 (binary-like block), *blockMin* is output for all pixels encoded as 0, and *blockMax* is output for all other pixels in the block (encoded as 1). All other blocks in the image or frame contain data generated by dispersed dither 35. In this case, the bit depth used for encoding is recovered from *recommendedBitDepth[blockMax-blockMin]*, and the encoding operation discussed above is inverted to output the corresponding pixel values.

A filtering operation corresponding to a low-pass filter 36 or equivalent with some sharpening may be performed on the decoded data to achieve the desired quality of perception in the final decoded output 37.

**D. Coding/Decoding Under a Fixed Bit Budget**

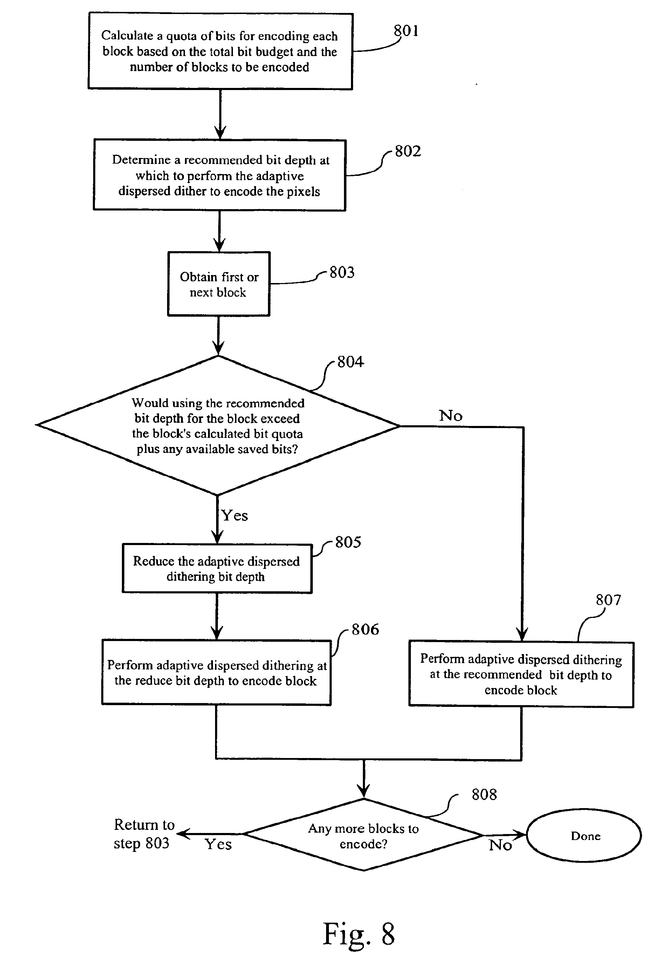

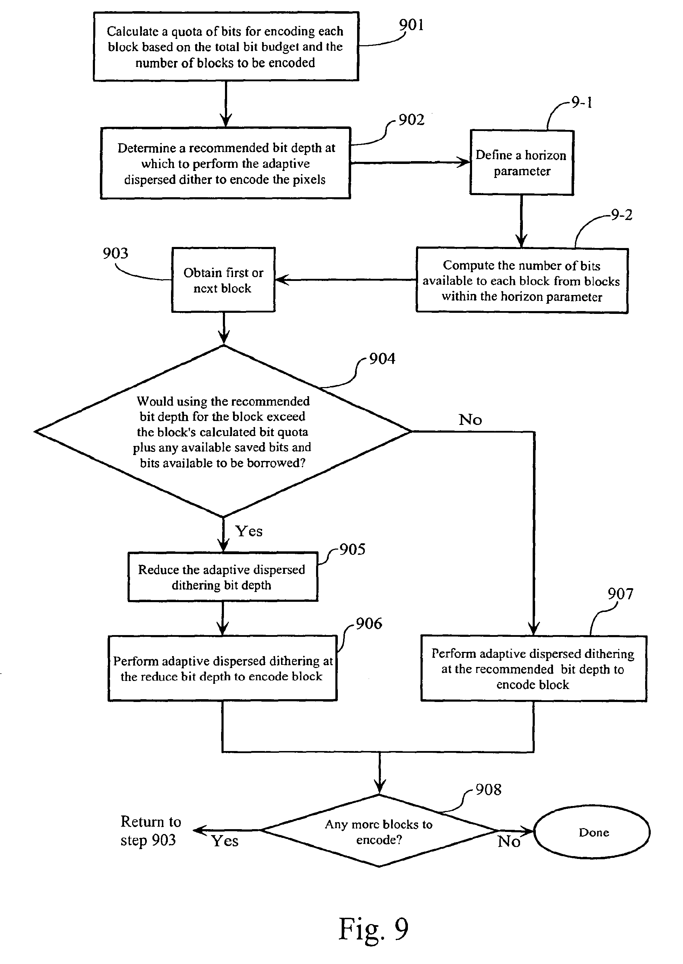

If the maximum size of the compressed output is bounded by a maximum bit budget, the above scheme can be modified as described below in connection with Figs. 8 and 9. During encoding, each block is reserved a quota of bits given by the ratio of the total bit budget to the number of image blocks to be encoded (step 801/901). A recommended bit depth (*recommendedBitDepth*) at which to perform the adaptive dispersed dither is determined (step 802/902).

In the fixed-bit-budget coding/decoding embodiment illustrated in Fig. 8, the first or next block is obtained (step 803), and it is determined in step 804 whether dithering at the recommended bit depth (*recommendedBitDepth*) would exceed the block's pre-calculated bit quota plus any available saved bits from encoding previous blocks. More specifically, during encoding, if using the bit depth given by *recommendedBitDepth[blockMax-blockMin]* will exceed the bit budget for the block minus two bytes (for storing the *maxBlock* and *minBlock* values), then in step 805 bit depth is reduced until there is sufficient bit budget. Note, however, that there are also cases when bits are saved, e.g., (i) when the encoding of a constant block consumes only two bytes (for *maxBlock* and *minBlock*), and no bits are consumed for dithering; and (ii) when the encoding of a binary-like block consumes two bytes and 1 bit/pixel for dithering. Both of these operations result in bit savings that can be allocated to dispersed-dither blocks that need more bits than their reserved quota. This mechanism for sharing and using saved bits is implemented by siphoning some of the saved bits to increase the reserved quota per block, and siphoning the remainder to a bit reservoir that can provide bits to any blocks that needs additional bits (subject to bit availability).

After the dithering bit depth is reduced to a level commensurate with the block's bit budget (step 805), adaptive dispersed dithering is performed at the reduced bit depth to encode the block (step 806). If no bit depth reduction is necessary (step 804 returns "no"), adaptive dispersed dithering is performed at the recommended bit depth to encode the block (step 807). If there are more blocks to encode, as determined in step 808, the process returns to step 803. After all of the blocks have been encoded, the process stops.

This or an alternate fixed-bit-budget coding/decoding scheme can also include a "borrow from the future" feature which is illustrated in connection with the embodiment of Fig. 9. If there are not enough saved bits (from previously encoded blocks) to meet the *recommendedBitDepth* for the current block, bits may be borrowed from blocks to be encoded in the future. This is achieved by defining a horizon parameter (step 9-1) that specifies the number of future blocks from which the current block can borrow bits. Given the horizon, the encoder 15 computes the number of bits that would be available if all blocks within the horizon were to be encoded with only 1 bit/pixel and 2 bytes/block (for *maxBlock* and *minBlock*) (step 9-2). The difference between the total bit budget for blocks in the horizon and this number represents the number of bits the current block may use while still guaranteeing that sufficient bits are available for encoding future blocks. With this enhancement, the current block may borrow from bits already saved and also from future blocks.

The processing flow of the embodiment of Fig. 9 is then similar to that of Fig. 8, except that when it is determined if the recommended bit depth is to be reduced (step 904), the block's pre-calculated bit quota and any available saved bits from encoding previous blocks plus bits available to be borrowed from future blocks is taken into account. If the bit depth is to be reduced, it is done in step 905, followed by adaptive dispersed dithering to encode the block (step 906). If no bit depth reduction is necessary, adaptive dispersed dithering is performed at the recommended bit depth to encode the block (step 907). As explained above, this encoding process continues until all of the blocks have been encoded (step 908), after which the process stops.

The decoder 24 can keep track of the exact bit consumption for each block, and knowing the overall bit budget can reverse all the encoding steps at the encoder. Thus, the encoder 15 and decoder 24 can operate to guarantee that the compressed bit stream is no larger than a prescribed size. It is important to note that the specified bit budget must be greater than or equal to the minimum number of bits required to guarantee compression of the entire image, which is, 2 bytes per block and 1 bit/pixel.

**E. Temporal Dithering**

The perceived output quality for video frames compressed by the techniques of this invention can be improved significantly by changing the dither matrix used for dispersed dithering in each frame. This is achieved by using a set of dither matrices that are cycled periodically both in the encoder 15 and the decoder 24. One method for constructing such a set of dither matrices is as follows. Start with a $128 \times 128$ dispersed dither matrix. From this matrix, 4 dispersed dither matrices ($64 \times 64$ each) may be generated by partitioning the initial matrix into: Matrix A which is made up of $d_{ij}$ from the original $128 \times 128$ matrix where both $i$ and $j$ are even numbers; Matrix B which has $d_{ij}$ where i is even but $j$ is odd; Matrix C which has $d_{ij}$ where $i$ is odd but $j$ is even; and Matrix D which has $d_{ij}$ where both $i$ and $j$ are odd. The dither matrices for successive frames are chosen cyclically as A, D, B, C, A, D, B, C, ....

Other methods for generating a family of dither matrices and sequences for temporal dithering may also be chosen. The encoding and decoding steps are unchanged except for the lock-step change in dither matrices. The use of this technique especially improves the visual perception of a sequence of images encoded with low bit depth.

**F. Illustration of blocks**

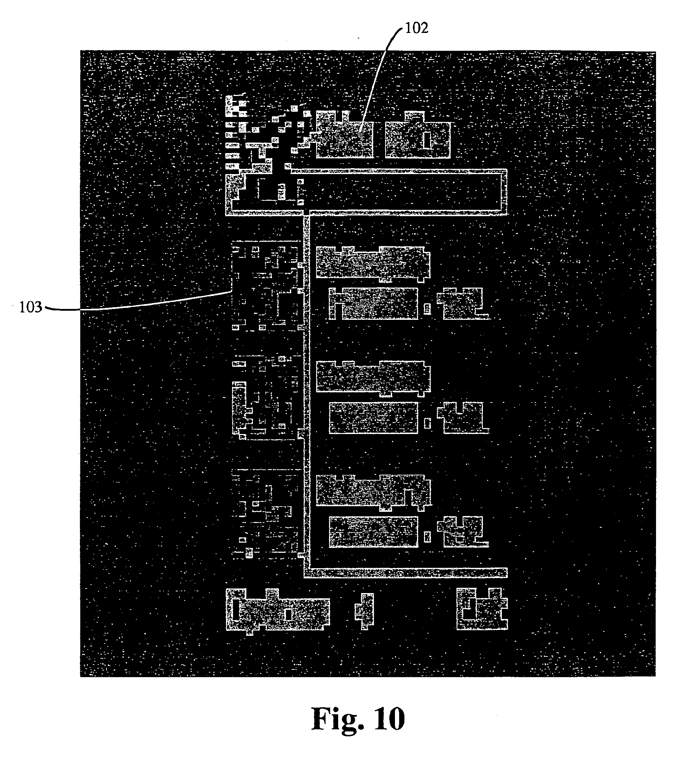

Fig. 10 is an illustration of an image to which a coding technique of the present invention has been applied. The constant blocks, binary-like blocks and dithered blocks are identified. The medium dark areas identified by the reference numeral 101 contains the constant blocks, and the light areas identified by the reference numeral 102 contain the binary-like blocks. The dispersed-dither blocks are in the darkest areas 103. Darker shades correspond to higher dithering bit depth. It should be noted that the aspect ratio is not square because the block dimensions have an aspect ratio of 2 (i.e., 4 rows by 8 columns per block).

**G. Other Functions Supported by the Codec**

G.1 Contrast and Brightness Adjustment

The described codec 11 can easily perform brightness and contrast adjustments by adjusting only the values in the much smaller minimum and maximum images. If the values in the minimum and maximum images are both increased, the image will become brighter. If the minimum image values are scaled down while the maximum image values are scaled up, the image contrast will increase.

G.2 Accessing/Decoding Random Blocks

The described codec 11 also allows rapid decoding of only a subset of blocks of interest without decoding the entire image. This operation requires stepping through the (much smaller) minimum and maximum images to find the bit positions for the desired block(s) in the dithered data, and decoding the desired blocks as described in previous sections.

**H. Applications/Implementations**

Depending on the particular application of the invention, various system arrangements are possible. In the arrangement illustrated in Fig. 1, the codec 11 is embodied in a video controller 12 and is part of coding/decoding pipelines that include other components. Some or all of those other components may be embodied in the video controller 12 (e.g., preprocessor and frame buffer) while others may be external (e.g., buffer transmission encoder and decoder). The line of demarcation between "internal" and "external" components given in the illustrated arrangement is exemplary only. Such a demarcation line can and often will vary depending on the particular application and/or circumstance of use.

The functions of the codec 11 (and the individual encoder 15 and decoder 24) may be implemented conveniently with either hardware or software or combination thereof. In a software implementation, the codec 11 includes an instruction-driven processor that may interface with a random access memory (RAM) from which programs that implement various aspects of the coding/decoding operations of this invention are accessed. More broadly, such programs may be conveyed from any suitable location—local or remote—to the codec 11 through any of a variety of machine-readable medium including magnetic tape or disk or optical disc, network signals, or any suitable electromagnetic carrier signal including an infrared signal. A hardware implementation may be realized, for example, using ASIC(s), digital signal processing circuitry, or the like. Accordingly, the claim language "device-readable medium" includes not only software-carrying media, but also hardware having instructions for performing the required processing hardwired thereon, as well as a combination of hardware and software. Similarly, the claim language "program of instructions" includes both software and instructions embedded on hardware. With these implementation alternatives in mind, it is to be understood that the figures and accompanying description provide the functional information one skilled in the art would require to write program code (i.e., software) or to fabricate circuits (i.e., hardware) to perform the processing required.

While the invention has been described in conjunction with several specific embodiments, many further alternatives, modifications, variations and applications will be apparent to those skilled in the art that in light of the foregoing description. Thus, the invention described herein is intended to embrace all such alternatives, modifications, variations and applications as may fall within the spirit and scope of the appended claims.

**Claims**

1. A method for compressing data, comprising:

   (a) tiling an input representation or frame into a plurality of blocks, each of which contains a plurality of pixels, each having a value;
   (b) determining and storing the maximum pixel value and minimum pixel value in each block of the input representation or frame; and
   (c) for select blocks in the input representation or frame, encoding the values of the pixels in a given block based on the maximum or minimum pixel value determined for that block using an adaptive dispersed dither to generate a compressed output.

2. A method as recited in claim 1, wherein, in encoding step (c), for each pixel in a given block, a difference between the value of that pixel and that block's minimum pixel value is encoded using the adaptive dispersed dither.

3. A method as recited in claim 2, wherein the encoding of the values of the pixels in the given block using an adaptive dispersed dither comprises:

   determining a bit depth $b$ at which to perform the adaptive dispersed dither;
   rescaling each pixel value in the given block; and
   representing each rescaled pixel value in the given block as one of two dithered $b$-bit values.

4. A method as recited in claim 2, further comprising:

   determining, for each block in the input representation or frame, whether the difference between the block's maximum and minimum pixel values is less than a predefined threshold; and
   skipping encoding step (c) for each of the blocks for which the difference between the maximum pixel and minimum pixel values is determined to be less than the predefined threshold.

5. A method as recited in claim 2, further comprising:

determining, for each block in the input representation or frame, whether all pixels in that block are within a predetermined distance of the maximum pixel value or minimum pixel value in that block; and

skipping encoding step (c) for each of the blocks for which all pixels are determined to be within a predetermined distance of that block's maximum or minimum pixel value.

6. A method as recited in claim 5, wherein, for each of the blocks for which it is determined that all pixels are within the predetermined distance of that block's maximum or minimum pixel value, encoding each of the pixels in that block with a single bit.

7. A method as recited in claim 1, wherein the generated compressed output is bounded by a bit budget, and wherein the encoding of the values of the pixels in the given block using an adaptive dispersed dither comprises:

calculating a quota of bits for each block based on the bit budget and the number of blocks to be encoded;
determining a recommended bit depth at which to perform the adaptive dispersed dither;
reducing the recommended bit depth for a given block, if using the recommended bit depth for that block would exceed the block's calculated quota plus any saved bits available from encoding previous blocks; and
for each block for which the recommended bit depth is reduced, performing the adaptive dispersed dither on each block at the reduced bit depth calculated for that block, and for each block for which the recommended bit depth is not reduced, performing the adaptive dispersed dither at the recommended bit depth.

8. A method as recited in claim 1, wherein the generated compressed output is bounded by a bit budget, and wherein the encoding of the values of the pixels in the given block using an adaptive dispersed dither comprises:

calculating a quota of bits for each block based on the bit budget and the number of blocks to be encoded;
determining a recommended bit depth at which to perform the adaptive dispersed dither;
defining a horizon parameter that specifies a number of yet-to-be-encoded blocks from which a current block can borrow bits;
computing a number of bits that would be available to a given block from all yet-to-be-encoded blocks within the horizon parameter;
reducing the recommended bit depth for a given block, if using the recommended bit depth for that block would exceed the block's calculated quota plus any saved bits available from encoding previous blocks plus the number of bits that would be available to that block from all yet-to-be-encoded blocks within the horizon parameter; and
for each block for which the recommended bit depth is reduced, performing the adaptive dispersed dither on each block at the reduced bit depth calculated for that block, and for each block for which the recommended bit depth is not reduced, performing the adaptive dispersed dither at the recommended bit depth.

9. A method as recited in claim 1, wherein the select blocks in the input representation or frame comprise all or a subset of all of the blocks in the input representation or frame.

10. A device configured to compress data, comprising:

a processor configured to (i) tile an input representation or frame into a plurality of blocks, each of which contains a plurality of pixels, each having a value, and (ii) determine the maximum pixel value and minimum pixel value in each block of the input representation or frame;
a memory configured to store the determined maximum and minimum pixel values; and
an encoder configured to encode the values of the pixels in a given block of select blocks in the input representation or frame based on the maximum or minimum pixel value determined for that block using an adaptive dispersed dither to generate a compressed output.

11. A device as recited in claim 10, wherein the encoder is further configured to encode, for each pixel in a given block, a difference between the value of that pixel and that block's minimum pixel value using the adaptive dispersed dither.

12. A device as recited in claim 11, wherein, in encoding the values of the pixels in the given block using an adaptive dispersed dither, the encoder is further configured to:

determine a bit depth $b$ at which to perform the adaptive dispersed dither;
rescale each pixel value in the given block; and
represent each rescaled pixel value in the given block as one of two dithered $b$-bit values.

**13.** A device as recited in claim 11, wherein the encoder is further configured to:

determine, for each block in the input representation or frame, whether the difference between the block's maximum and minimum pixel values is less than a predefined threshold; and

skip encoding for (i) each of the blocks for which the difference between the maximum pixel and minimum pixel values is determined to be less than the predefined threshold, or (ii) each of the blocks for which all pixels are determined to be within a predetermined distance of that block's maximum or minimum pixel value.

**14.** A device as recited in claim 13, wherein the encoder is further configured to encode each of the pixels in a block for which it is determined that all pixels are within the predetermined distance of that block's maximum or minimum pixel value with a single bit.

**15.** A device as recited in claim 10, wherein the generated compressed output is bounded by a bit budget, and wherein the encoder is further configured to:

calculate a quota of bits for each block based on the bit budget and the number of blocks to be encoded;
determine a recommended bit depth at which to perform the adaptive dispersed dither;
reduce the recommended bit depth for a given block, if using the recommended bit depth for that block would exceed the block's calculated quota plus any saved bits available from encoding previous blocks; and
perform the adaptive dispersed dither on each block for which the recommended bit depth is reduced at the reduced bit depth calculated for that block, and perform the adaptive dispersed dither at the recommended bit depth for each block for which the recommended bit depth is not reduced.

**16.** A device as recited in claim 10, wherein the generated compressed output is bounded by a bit budget, and wherein the encoder is further configured to:

calculate a quota of bits for each block based on the bit budget and the number of blocks to be encoded;
determine a recommended bit depth at which to perform the adaptive dispersed dither;
define a horizon parameter that specifies a number of yet-to-be-encoded blocks from which a current block can borrow bits;
compute a number of bits that would be available to a given block from all yet-to-be-encoded blocks within the horizon parameter;
reduce the recommended bit depth for a given block, if using the recommended bit depth for that block would exceed the block's calculated quota plus any saved bits available from encoding previous blocks plus the number of bits that would be available to that block from all yet-to-be-encoded blocks within the horizon parameter; and
perform the adaptive dispersed dither on each block for which the recommended bit depth is reduced at the reduced bit depth calculated for that block, and perform the adaptive dispersed dither at the recommended bit depth for each block for which the recommended bit depth is not reduced.

**17.** A device as recited in claim 10, wherein the device comprises a codec.

**18.** A device-readable medium containing a program of instructions for directing a device to compress data, the program comprising:

(a) instructions for tiling an input representation or frame into a plurality of blocks, each of which contains a plurality of pixels, each having a value; .
(b) instructions for determining and storing the maximum pixel value and minimum pixel value in each block of the input representation or frame; and
(c) instructions for encoding the values of the pixels in a given block, of select blocks in the input representation or frame, based on the maximum or minimum pixel value determined for that block using an adaptive dispersed dither to generate a compressed output.

**19.** A device-readable medium as recited in claim 18, wherein the encoding instructions (c) comprise, for each pixel in a given block, instructions for encoding a difference between the value of that pixel and that block's minimum pixel value using the adaptive dispersed dither.

**20.** A device-readable medium as recited in claim 19, wherein the instructions for encoding the values of the pixels in the given block using an adaptive dispersed dither comprises:

instructions for determining a bit depth $b$ at which to perform the adaptive dispersed dither;
instructions for rescaling each pixel value in the given block; and
instructions for representing each rescaled pixel value in the given block as one of two dithered $b$-bit values.

**21.** A device-readable medium as recited in claim 19, further comprising:

instructions for determining, for each block in the input representation or frame, whether the difference between the block's maximum and minimum pixel values is less than a predefined threshold; and
instructions for skipping the encoding instructions (c) for each of the blocks for which the difference between the maximum pixel and minimum pixel values is determined to be less than the predefined threshold.

**22.** A device-readable medium as recited in claim 19, further comprising:

instructions for determining, for each block in the input representation or frame, whether all pixels in that block are within a predetermined distance of the maximum pixel value or minimum pixel value in that block; and
instructions for skipping the encoding instructions (c) for each of the blocks for which all pixels are determined to be within a predetermined distance of that block's maximum or minimum pixel value.

**23.** A device-readable medium as recited in claim 22, further comprising instructions for encoding each of the pixels in a block for which it is determined that all pixels are within the predetermined distance of that block's maximum or minimum pixel value with a single bit.

**24.** A device-readable medium as recited in claim 18, wherein the generated compressed output is bounded by a bit budget, and wherein the instructions for encoding the values of the pixels in the given block using an adaptive dispersed dither comprises:

instructions for calculating a quota of bits for each block based on the bit budget and the number of blocks to be encoded;
instructions for determining a recommended bit depth at which to perform the adaptive dispersed dither;
instructions for reducing the recommended bit depth for a given block, if using the recommended bit depth for that block would exceed the block's calculated quota plus any saved bits available from encoding previous blocks; and
instructions for performing the adaptive dispersed dither on each block for which the recommended bit depth is reduced at the reduced bit depth calculated for that block, and for performing the adaptive dispersed dither at the recommended bit depth for each block for which the recommended bit depth is not reduced.

**25.** A device-readable medium as recited in claim 18, wherein the generated compressed output is bounded by a bit budget, and wherein the instructions for encoding the values of the pixels in the given block using an adaptive dispersed dither comprises:

instructions for calculating a quota of bits for each block based on the bit budget and the number of blocks to be encoded;
instructions for determining a recommended bit depth at which to perform the adaptive dispersed dither;
instructions for defining a horizon parameter that specifies a number of yet-to-be-encoded blocks from which a current block can borrow bits;
instructions for computing a number of bits that would be available to a given block from all yet-to-be-encoded blocks within the horizon parameter;
instructions for reducing the recommended bit depth for a given block, if using the recommended bit depth for that block would exceed the block's calculated quota plus any saved bits available from encoding previous blocks plus the number of bits that would be available to that block from all yet-to-be-encoded blocks within the horizon parameter; and
instructions for performing the adaptive dispersed dither on each block for which the recommended bit depth is reduced at the reduced bit depth calculated for that block, and for performing the adaptive dispersed dither at the recommended bit depth for each block for which the recommended bit depth is not reduced.

**26.** A device-readable medium as recited in claim 18, wherein the select blocks in the input representation or frame comprise all or a subset of all of the blocks in the input representation or frame.

Fig. 1

21

**Video editor**

**Video (03)**
11/05/2003 - 11:32..

**Video (02)**
10/05/2003 - 15:40..

**Video (01)**
10/05/2003 - 13:12..

Options   ⬍   Exit

**Fig. 2**

31

**Video editor**

**Video (03)**
11/05/2003 - 11:32..

**Video (02)**
10/05/2003 - 15:40..

**Video (01)**
10/05/2003 - 13:12..

Options   ⬍   Exit

**Fi**

**Fig. 4**

EP 1 613 092 A2

Fig. 5

Fig. 6

Block-Maximum Image ─────────────────────────────┐

~ 33

Video editor

Video (03)
11/05/2003 - 11:32..

Video (02)
10/05/2003 - 15:40.. ── 34

Video (01)
10/05/2003 - 13:12..

Options ◆ Exit

Block-Minimum Image ─────────────────→ 

┌──────────────┐          ┌──────────────┐
│   Dither     │─────────→│    Filter    │
│   Scaling    │          │              │
└──────────────┘          └──────────────┘

36

Video editor

Video (03)
11/05/2003 - 11:32..

Video (02)
10/05/2003 - 15:40.. ── 35

Video (01)
10/05/2003 - 13:12..

Options ⇕ Exit

Video editor

Video (03)
11/05/2003 - 11:32..

Video (02)
10/05/2003 - 15:40.. ── 37

Video (01)
10/05/2003 - 13:12..

Options ⇕ Exit

Multi-level Dither Image ─────────────────┘

Output

# Fig. 7

Fig. 8

Calculate a quota of bits for encoding each block based on the total bit budget and the number of blocks to be encoded — 901

Determine a recommended bit depth at which to perform the adaptive dispersed dither to encode the pixels — 902

Define a horizon parameter — 9-1

Compute the number of bits available to each block from blocks within the horizon parameter — 9-2

903 — Obtain first or next block

904 — Would using the recommended bit depth for the block exceed the block's calculated bit quota plus any available saved bits and bits available to be borrowed?

No

Yes

Reduce the adaptive dispersed dithering bit depth — 905

Perform adaptive dispersed dithering at the reduce bit depth to encode block — 906

907 — Perform adaptive dispersed dithering at the recommended bit depth to encode block

908 — Any more blocks to encode?

Return to step 903

Yes

No

Done

Fig. 9

Fig. 10